# EUROPEAN PATENT APPLICATION

(11) **EP 4 539 299 A1**
(43) Date of publication of application: **16.04.2025**
(21) Application number: 23202610.4
(22) Date of filing: 10.10.2023
(51) Int. Cl.: H02J 50/00, H02J 50/20, H05B 47/19

(54) **LED DRIVER PROVIDING WIRELESS COMMUNICATION CAPABILITIES WHILE BEING NOT SUPPLIED BY MAINS POWER SUPPLY, CORRESPONDING SYSTEM AND METHOD**

(71) Applicant: Tridonic GmbH & Co. KG, 6851 Dornbirn (AT)
(72) Inventor: Lochmann, Frank, 6851 Dornbirn (AT); Barth, Alexander, 6851 Dornbirn (AT)
(74) Representative: Rupp, Christian

(57) **Abstract**

An LED driver (10) providing wireless communication capabilities while being not supplied by mains power supply is provided. Said LED driver (10) comprises a first communication unit (11) for wireless communication according to a first communication protocol, a second communication unit (12) for wireless communication according to a second communication protocol, and an energy harvesting unit (13) connected to the first communication unit (11) and the second communication unit (12). In this context, the energy harvesting unit (13) is configured to harvest energy from the first communication unit (11) for supplying the second communication unit (12).

## Description

The invention relates to an LED driver providing wireless communication capabilities while being not supplied by mains power supply, a system comprising such an LED driver and a remote device, and a method for wirelessly communicating with an LED driver being not supplied by mains power supply especially during production of said LED driver.

Generally, in times of an increasing number of LED lighting applications being programmable or readable or comprising programmable or readable LED drivers, respectively, there is a growing need to provide wireless communication capabilities with respect to such applications or such LED drivers, respectively, while said applications or LED drivers, respectively, are not necessarily supplied by mains power supply exemplarily in the case of production of such LED lighting applications or LED drivers, respectively, or a mains power supply failure.

Application Note AN5233 from STMicroelectronics N.V. discloses an energy harvesting application configured to harvest energy from an external radio frequency field and to provide said energy for supplying an e-paper or an electronic shelf price tag, respectively.

Accordingly, there is the object to provide an LED driver providing wireless communication capabilities while being not supplied by mains power supply, a system comprising such an LED driver and a remote device, and a method for wirelessly communicating with an LED driver being not supplied by mains power supply especially during production of said LED driver to ensure that said LED driver can reliably be programmed or read out even for the case of a lack of mains power supply.

This object is solved by the features of the first independent claim for an LED driver providing wireless communication capabilities while being not supplied by mains power supply, the features of the second independent claim for a system comprising such an LED driver and a remote device, and the features of the third independent claim for a method for wirelessly communicating with an LED driver being not supplied by mains power supply especially during production of said LED driver. The dependent claims contain further developments.

According to a first aspect of the invention, an LED driver providing wireless communication capabilities while being not supplied by mains power supply is provided. Said LED driver comprises a first communication unit for wireless communication according to a first communication protocol, a second communication unit for wireless communication according to a second communication protocol, and an energy harvesting unit connected to the first communication unit and the second communication unit. In this context, the energy harvesting unit is configured to harvest energy from the first communication unit for supplying the second communication unit.

Advantageously, even for the case of a lack of mains power supply, the LED driver can reliably be programmed or read out.

According to an implementation form of the first aspect of the invention, the first communication protocol is different from the second communication protocol. Advantageously, for instance, the first communication protocol can mainly be used for transfer of energy, whereas the second communication protocol can be used for transfer of data.

According to a further implementation form of the first aspect of the invention, a first data transfer rate of the first communication unit is lower than a second data transfer rate of the second communication unit. In addition to this or as an alternative, a first communication frequency of the first communication unit is lower than a second communication frequency of the second communication unit. Advantageously, for example, the first communication unit can mainly or exclusively be adapted for transfer of energy, whereas the second communication unit can exclusively be adapted for transfer of data.

According to a further implementation form of the first aspect of the invention, the first communication protocol comprises or is a near-field communication protocol. Advantageously, for instance, energy can efficiently be transferred.

According to a further implementation form of the first aspect of the invention, the second communication protocol comprises or is a Bluetooth protocol, especially a Bluetooth Low Energy protocol, a Wireless Local Area Network protocol, especially a Wireless Local Area Network protocol with low energy capabilities, a Matter protocol, or any combination thereof. Advantageously, for example, data can efficiently be transferred.

According to a further implementation form of the first aspect of the invention, the first communication unit is configured to transfer control data and/or activation data and/or enabling data and/or initialization data especially with respect to the LED driver. Advantageously, for instance, the second communication unit can be switched off for energy-saving purposes if the second communication unit is not needed.

According to a further implementation form of the first aspect of the invention, the second communication unit is configured to transfer configuration data and/or programming data and/or read out data especially with respect to the LED driver. Advantageously, for example, great amounts of data can efficiently be transferred.

According to a further implementation form of the first aspect of the invention, the second communication unit is configured to transfer at least one update, preferably at least one software update and/or at least one firmware update, especially with respect to the LED driver. Advantageously, for instance, the LED driver can efficiently be updated.

According to a further implementation form of the first aspect of the invention, the LED driver and/or the energy harvesting unit comprises at least one energy storage, preferably at least one capacitor. In this context, the energy harvesting unit is configured to buffer the correspondingly harvested energy with the aid of said at least one energy storage, preferably said at least one capacitor. Advantageously, for example, energy consumption peaks can be compensated.

According to a further implementation form of the first aspect of the invention, the LED driver comprises a combined antenna or a combined antenna array. In this context, the first communication unit and the second communication unit are configured to use said combined antenna or said combined antenna array preferably for the respective communication especially in a simultaneous manner. Advantageously, for instance, energy and data can be transferred with the same antenna.

According to a further implementation form of the first aspect of the invention, the first communication unit and the second communication unit are configured such that the first communication unit and the second communication unit communicate in a parallel and/or simultaneous manner. Advantageously, for example, energy and data can be transferred in parallel or simultaneously, respectively.

According to a second aspect of the invention, a system is provided. Said system comprises an LED driver according to the first aspect of the invention or any of its implementation forms, respectively, and a remote device for power-supplying and/or programming and/or configuring and/or reading out the LED driver. In this context, the remote device is configured to communicate with the LED driver, especially the first communication unit and/or the second communication unit of the LED driver.

Advantageously, even for the case of a lack of mains power supply, the LED driver can reliably be programmed or read out.

According to a third aspect of the invention, a method for wirelessly communicating with an LED driver being not supplied by mains power supply especially during production of said LED driver is provided. Said method comprises the steps of wirelessly communicating according to a first communication protocol with the aid of a first communication unit of the LED driver, wirelessly communicating according to a second communication protocol with the aid of a second communication unit of the LED driver, and harvesting energy from the first communication unit for supplying the second communication unit especially with the aid of an energy harvesting unit of the LED driver, said energy harvesting unit connected to the first communication unit and the second communication unit.

Advantageously, even for the case of a lack of mains power supply, the LED driver can reliably be programmed or read out.

According to an implementation form of the third aspect of the invention, the first communication protocol comprises or is a near-field communication protocol. In addition to this or as an alternative, the second communication protocol comprises or is a Bluetooth protocol, especially a Bluetooth Low Energy protocol, a Wireless Local Area Network protocol, especially a Wireless Local Area Network protocol with low energy capabilities, a Matter protocol, or any combination thereof. Advantageously, for instance, energy can efficiently be transferred. Further advantageously, for example, data can efficiently be transferred.

According to a further implementation form of the third aspect of the invention, the method further comprises the step or steps of transferring control data and/or activation data and/or enabling data and/or initialization data especially with respect to the LED driver preferably with the aid of the first communication unit, and/or transferring configuration data and/or programming data and/or read out data especially with respect to the LED driver preferably with the aid of the second communication unit. Advantageously, for instance, the second communication unit can be switched off for energy-saving purposes if the second communication unit is not needed. Further advantageously, for example, great amounts of data can efficiently be transferred.

Exemplary embodiments of the invention are now further explained with respect to the drawings by way of example only, and not for limitation. In the drawings:
- Fig. 1: shows an exemplary embodiment of an inventive LED driver;
- Fig. 2: shows a further exemplary embodiment of an inventive LED driver;
- Fig. 3A: shows a first detailed view of an exemplary combined antenna employed by the embodiment of Fig. 2;
- Fig. 3B: shows a second detailed view of the exemplary combined antenna employed by the embodiment of Fig. 2;
- Fig. 4: shows an exemplary embodiment of the system according to the second aspect of the invention; and
- Fig. 5: shows a flow chart of an exemplary embodiment of the third aspect of the invention.

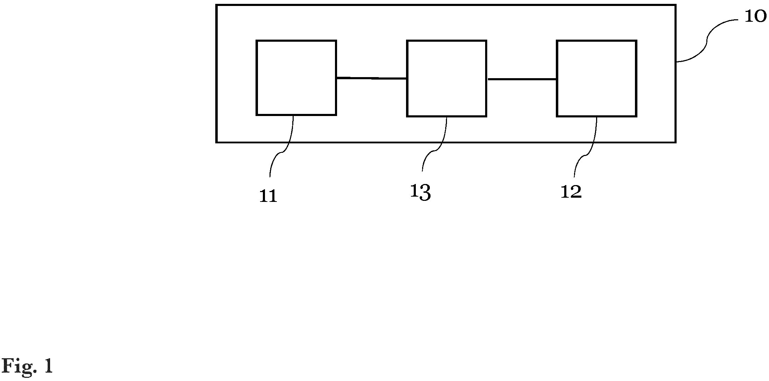

With respect to Fig. 1, a block diagram of an exemplary embodiment of an LED driver 10 providing wireless communication capabilities while being not necessarily supplied by mains power supply is illustrated.

In accordance with said Fig. 1, the LED driver 10 comprises a first communication unit 11 for wireless communication according to a first communication protocol, a second communication unit 12 for wireless communication according to a second communication protocol, and an energy harvesting unit 13 connected to the first communication unit 11 and the second communication unit 12.

In this context, the energy harvesting unit 13 is configured to harvest energy from the first communication unit 11 for supplying the second communication unit 12.

Accordingly, the first communication unit 11 may preferably be used in the context of transfer of energy, whereas the second communication unit 12 may preferably be used in the context of transfer of data.

It is noted that it might be particularly advantageous if the LED driver 10 is configured to wirelessly transfer energy and data in a parallel manner.

It is further noted that the second communication unit 12 may be configured to be activatable without the need to supply the LED driver 10 with mains power.

With respect to the above-mentioned communication protocols, it is noted that it might be particularly advantageous if the first communication protocol is different from the second communication protocol.

It is further noted that it might be particularly advantageous if a first data transfer rate of the first communication unit 11 is lower than a second data transfer rate of the second communication unit 12.

For instance, the first data transfer rate may be lower than 500 kbps, preferably lower than 450 kbps, more preferably lower than 425 kbps, most preferably 0 or 424 kbps.

Further exemplarily, the second data transfer rate may be at least 700 kbps, preferably at least 1 Mbps, more preferably at least 2 Mbps, most preferably at least 20 Mbps.

Additionally or alternatively, a first communication frequency of the first communication unit 11 may preferably be lower than a second communication frequency of the second communication unit 12.

For example, the first communication frequency may be lower than 1 GHz, preferably lower than 20 MHz, more preferably lower than 14 MHz, most preferably 13.56 MHz or lower than 150 kHz.

Further exemplarily, the second communication frequency may be at least 1 GHz, preferably at least 2 GHz, more preferably at least 2.4 GHz, most preferably at least 2.404 GHz.

With respect to the first communication protocol, it is noted that it might be particularly advantageous if the first communication protocol comprises or is a near-field communication protocol.

With respect to the second communication protocol, it is noted that it might be particularly advantageous if the second communication protocol comprises or is a Bluetooth protocol, especially a Bluetooth Low Energy protocol, a Wireless Local Area Network protocol, especially a Wireless Local Area Network protocol with low energy capabilities, a Matter protocol, or any combination thereof.

Furthermore, with respect to the first communication unit 11, it is noted that the first communication unit 11 may preferably be configured to transfer control data and/or activation data and/or enabling data and/or initialization data especially with respect to the LED driver 10.

Accordingly, even if the first communication unit 11 may mainly be used in the context of transfer of energy, the first communication unit 11 may additionally be used in the context of transfer of data with a low amount of data.

Moreover, with respect to the second communication unit 12, it is noted that the second communication unit 12 may preferably be configured to transfer configuration data and/or programming data and/or read out data especially with respect to the LED driver 10.

Accordingly, especially by contrast to the first communication unit 11, the second communication unit 12 may be used in the context of transfer of data with a high amount of data.

It is further noted that it might be particularly advantageous if the second communication unit 12 is configured to transfer at least one update, preferably at least one software update and/or at least one firmware update, especially with respect to the LED driver 10.

Furthermore, it might be particularly advantageous if the LED driver 10 and/or the energy harvesting unit 13 comprises at least one energy storage, preferably at least one capacitor.

In this context, the energy harvesting unit 13 may be configured to buffer the correspondingly harvested energy with the aid of said at least one energy storage, preferably said at least one capacitor.

Moreover, it might be particularly advantageous if the LED driver 10 comprises a combined antenna or a combined antenna array.

In this context, the first communication unit 11 and the second communication unit 12 may be configured to use said combined antenna or said combined antenna array preferably for the respective communication especially in a simultaneous manner.

With respect to the combined antenna, it is noted that the combined antenna may comprise or be a combined near-field communication Bluetooth antenna, a combined near-field communication Wireless Local Area Network antenna, or a combined near-field communication Matter antenna.

It is further noted that it might be particularly advantageous if the first communication unit 11 and the second communication unit 12 are configured such that the first communication unit 11 and the second communication unit 12 communicate in a parallel and/or simultaneous manner.

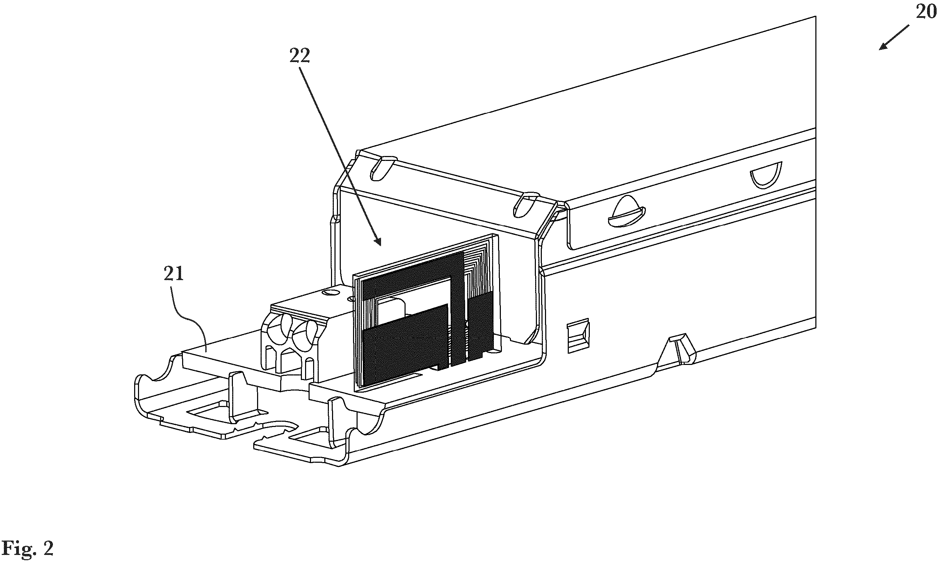

Now, with respect to Fig. 2, a further exemplary embodiment of an LED driver 20 providing wireless communication capabilities while being not supplied by mains power supply is depicted.

It is noted that all the explanations above regarding the LED driver 10 of Fig. 1 can analogously apply for the LED driver 20 of Fig. 2, and vice versa.

As it can be seen from Fig. 2, the LED driver 20 comprises a first printed circuit board 21, exemplarily a main printed circuit board, and a second printed circuit board 22, exemplarily a sub-printed circuit board.

With respect to the second printed circuit board 22, it is noted that said second printed circuit board 22 comprises or is a combined antenna such as the above-mentioned combined antenna.

In this exemplary case according to Fig. 2, the combined antenna is a combined near-field communication Bluetooth antenna. It is noted that it might be particularly advantageous if the combined antenna is adapted for operating frequencies of 13.56 MHz and 2.4 GHz. Additionally or alternatively, the combined antenna may be adapted for transferring energy and data in a parallel and/or simultaneous manner.

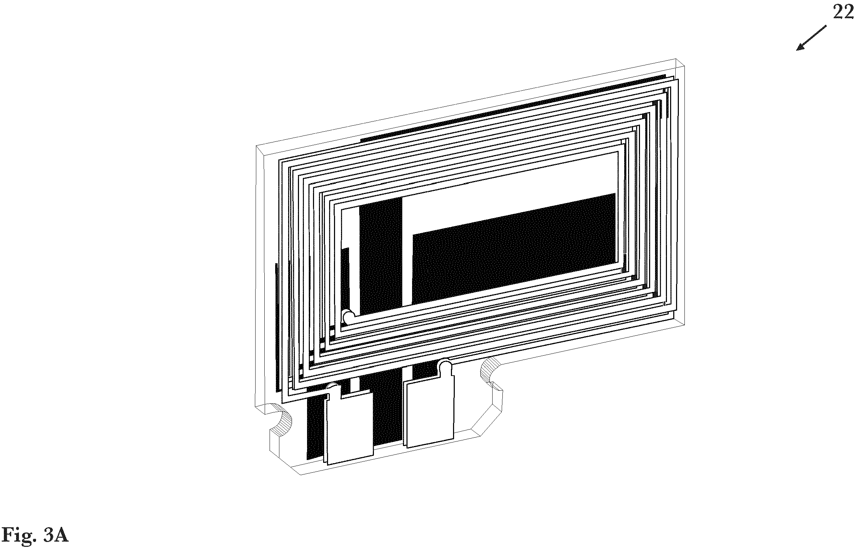

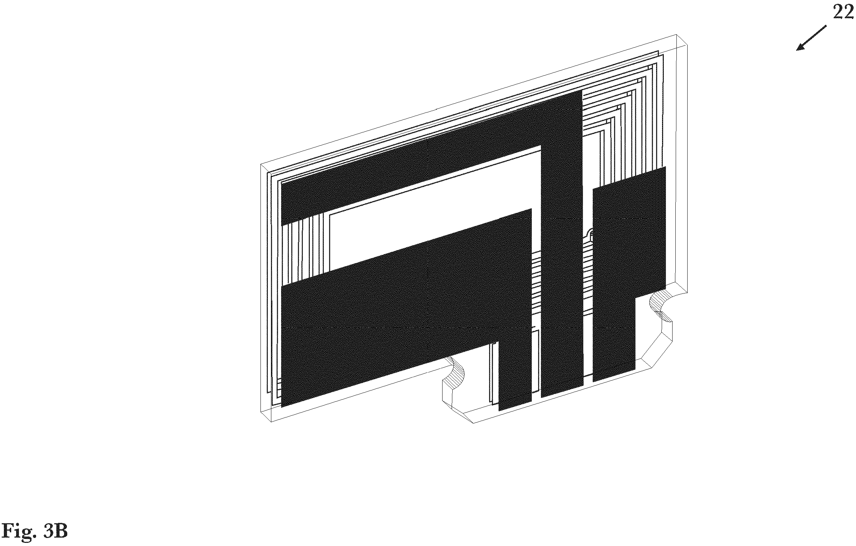

It is noted that the second printed circuit board 22 or the combined antenna, respectively, is depicted in greater detail in Fig. 3A and Fig. 3B.

Whereas Fig. 3A exemplarily illustrates a first portion of the combined antenna, said first portion arranged on a first surface of the second printed circuit board 22, Fig. 3B depicts a second portion of the combined antenna, said second portion arranged on a second surface of the second printed board 22. Exemplarily, said first surface is opposite to said second surface.

For instance, the first portion of the combined antenna is adapted for near-field communication and/or an operating frequency of 13.56 MHz, and/or the second portion of the combined antenna is adapted for Bluetooth communication and/or an operating frequency of 2.4 GHz.

Generally, with respect to a combined antenna in the sense of the invention, it is noted that it might be particularly advantageous if the combined antenna comprises a first antenna portion adapted for communication according to a first communication protocol, such as the above-mentioned first communication protocol, and a second antenna portion adapted for communication according to a second communication protocol, such as the above-mentioned second communication protocol.

Furthermore, said first antenna portion may be arranged on a first surface of a printed circuit board, especially an antenna printed circuit board exclusively comprising the combined antenna, and said second antenna portion may be arranged on a second surface of said printed circuit board, especially said antenna printed circuit board. Preferably, said first surface may be opposite to the second surface.

Again, with respect to the above-mentioned first printed circuit board 21 or the above-mentioned main printed circuit board, respectively, of the LED driver 20 according to Fig. 2, it is noted that the first printed circuit board 21 may comprise at least two of a first communication unit, a second communication unit, and an energy harvesting unit, such the ones 11, 12, 13 of Fig. 1, preferably at least the first communication unit and the second communication unit.

It is further noted that it might be particularly advantageous if the first communication unit is arranged on a first surface of the first printed circuit board 21 or the main printed circuit board, respectively, and the second communication unit is arranged on a second surface of the first printed circuit board 21 or the main printed circuit board, respectively. Preferably, said first surface may be opposite to said second surface.

As it can further be seen from Fig. 2, the second printed circuit board 22 or the antenna printed circuit board, respectively, is arranged with respect to the first printed circuit board 21 or the main printed circuit board, respectively, in a perpendicular or substantially perpendicular manner.

With respect to the above-mentioned term "substantially perpendicular", it is noted that said term can be understood as a deviation of not more than 25 per cent, preferably not more than 15 per cent, more preferably not more than 5 per cent, most preferably not more than 3 per cent, from 90 degrees.

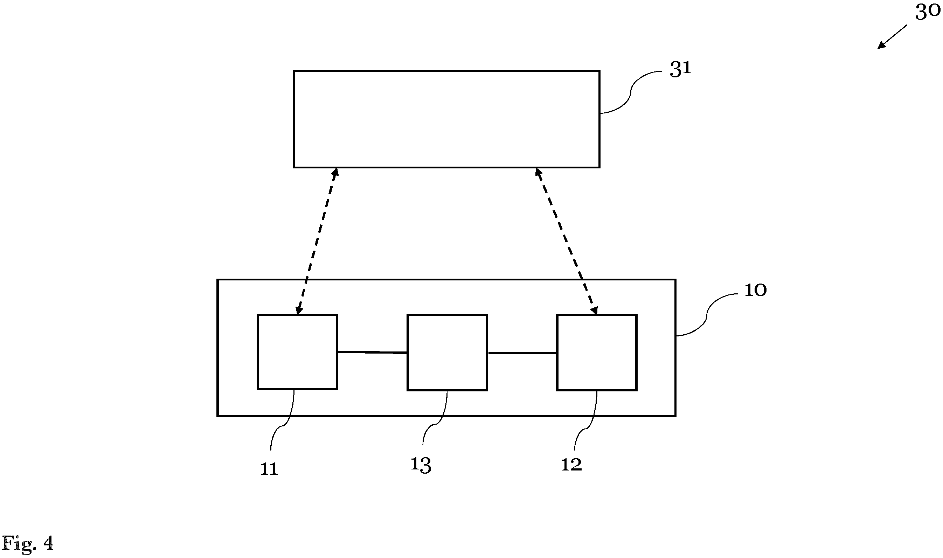

Now, with respect to Fig. 4, a system 30 is shown. Said system 30 comprises the LED driver 10 according to Fig. 1 and a remote device 31 for power-supplying and/or programming and/or configuring and/or reading out the LED driver 10.

In this context, the remote device 31 is configured to communicate with the LED driver 10, especially the first communication unit 11 and/or the second communication unit 12 of the LED driver 10.

With respect to the remote device 31, it is noted said remote device 31 may especially comprise or be a programming device, preferably a wireless programming device.

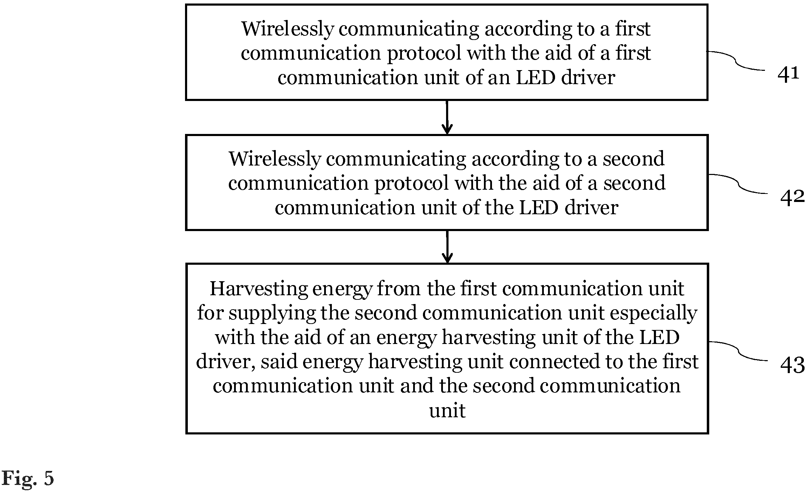

Finally, Fig. 5 shows a flow chart of an exemplary embodiment of the method for wirelessly communicating with an LED driver being not supplied by mains power supply especially during production of said LED driver.

A first step 41 comprises wirelessly communicating according to a first communication protocol with the aid of a first communication unit of the LED driver such as the above-mentioned first communication unit 11 of the LED driver 10 according to Fig. 1.

Furthermore, a second step 42 comprises wirelessly communicating according to a second communication protocol with the aid of a second communication unit of the LED driver such the above-mentioned second communication unit 12 of the LED driver 10 of Fig. 1.

As it can further be seen from Fig. 5, a third step 43 comprises harvesting energy from the first communication unit for supplying the second communication unit especially with the aid of an energy harvesting unit of the LED driver, such as the above-mentioned energy harvesting unit 13 of the LED driver 10 of Fig. 1, said energy harvesting unit connected to the first communication unit and the second communication unit.

It is noted that it might be particularly advantageous if the first communication protocol is different from the second communication protocol.

Additionally or alternatively, a first data transfer rate of the first communication unit may preferably be lower than a second data transfer rate of the second communication unit.

In further addition to this or as a further alternative, a first communication frequency of the first communication unit may preferably be lower than a second communication frequency of the second communication unit.

It is further noted that it might be particularly advantageous if the first communication protocol comprises or is a near-field communication protocol.

Additionally or alternatively, the second communication protocol may comprise or be a Bluetooth protocol, especially a Bluetooth Low Energy protocol, a Wireless Local Area Network protocol, especially a Wireless Local Area Network protocol with low energy capabilities, a Matter protocol, or any combination thereof.

Moreover, it might be particularly advantageous if the method further comprises the step or steps of transferring control data and/or activation data and/or enabling data and/or initialization data especially with respect to the LED driver preferably with the aid of the first communication unit, and/or transferring configuration data and/or programming data and/or read out data especially with respect to the LED driver preferably with the aid of the second communication unit.

Furthermore, the method may comprise the step of transferring at least one update, such as at least one software update and/or at least one firmware update, especially with respect to the LED driver preferably with the aid of the second communication unit.

It is noted that it might be particularly advantageous if the LED driver and/or the energy harvesting unit comprises at least one energy storage, preferably at least one capacitor.

In this context, the method may further comprise the step of buffering the correspondingly harvested energy with the aid of said at least one energy storage, preferably said at least one capacitor, especially with the aid of the energy harvesting unit.

It is further noted that it might be particularly advantageous if the LED driver comprises a combined antenna, such as the above-mentioned combined antenna 22 of the LED driver 20 according to Fig. 2, or a combined antenna array.

In this context, the method may comprise the step of, exemplarily with the aid of the first communication unit and the second communication unit, using said combined antenna or said combined antenna array preferably for the respective communication especially in a simultaneous manner.

Moreover, it might be particularly advantageous if the method further comprises the step of configuring the first communication unit and the second communication unit such that the first communication unit and the second communication unit communicate in a parallel and/or simultaneous manner.

Accordingly, the method may further comprise the step of communicating in a parallel and/or simultaneous manner especially with the aid of the first communication unit and the second communication unit.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. An LED driver (10, 20) providing wireless communication capabilities while being not supplied by mains power supply, the LED driver (10, 20) comprising:
a first communication unit (11) for wireless communication according to a first communication protocol,
a second communication unit (12) for wireless communication according to a second communication protocol, and
an energy harvesting unit (13) connected to the first communication unit (11) and the second communication unit (12),
wherein the energy harvesting unit (13) is configured to harvest energy from the first communication unit (11) for supplying the second communication unit (12).

2. The LED driver (10, 20) according to claim 1,
wherein the first communication protocol is different from the second communication protocol.

3. The LED driver (10, 20) according to claim 1 or 2,
wherein a first data transfer rate of the first communication unit (11) is lower than a second data transfer rate of the second communication unit (12), and/or wherein a first communication frequency of the first communication unit (11) is lower than a second communication frequency of the second communication unit (12).

4. The LED driver (10, 20) according to any of the claims 1 to 3,
wherein the first communication protocol comprises or is a near-field communication protocol.

5. The LED driver (10, 20) according to any of the claims 1 to 4,
wherein the second communication protocol comprises or is a Bluetooth protocol, especially a Bluetooth Low Energy protocol, a Wireless Local Area Network protocol, especially a Wireless Local Area Network protocol with low energy capabilities, a Matter protocol, or any combination thereof.

6. The LED driver (10, 20) according to any of the claims 1 to 5,
wherein the first communication unit (11) is configured to transfer control data and/or activation data and/or enabling data and/or initialization data especially with respect to the LED driver (10, 20).

7. The LED driver (10, 20) according to any of the claims 1 to 6,
wherein the second communication unit (12) is configured to transfer configuration data and/or programming data and/or read out data especially with respect to the LED driver (10, 20).

8. The LED driver (10, 20) according to any of the claims 1 to 7,
wherein the second communication unit (12) is configured to transfer at least one update, preferably at least one software update and/or at least one firmware update, especially with respect to the LED driver (10, 20).

9. The LED driver (10, 20) according to any of the claims 1 to 8,
wherein the LED driver (10, 20) and/or the energy harvesting unit (13) comprises at least one energy storage, preferably at least one capacitor,
wherein the energy harvesting unit (13) is configured to buffer the correspondingly harvested energy with the aid of said at least one energy storage, preferably said at least one capacitor.

10. The LED driver (10, 20) according to any of the claims 1 to 9,
wherein the LED driver (10, 20) comprises a combined antenna (22) or a combined antenna array,
wherein the first communication unit (11) and the second communication unit (12) are configured to use said combined antenna (22) or said combined antenna array preferably for the respective communication especially in a simultaneous manner.

11. The LED driver (10, 20) according to any of the claims 1 to 10,
wherein the first communication unit (11) and the second communication unit (12) are configured such that the first communication unit (11) and the second communication unit (12) communicate in a parallel and/or simultaneous manner.

12. A system (30) comprising:
an LED driver (10, 20) according to any of the claims 1 to 11, and
a remote device (31) for power-supplying and/or programming and/or configuring and/or reading out the LED driver (10, 20),
wherein the remote device (31) is configured to communicate with the LED driver (10, 20), especially the first communication unit (11) and/or the second communication unit (12) of the LED driver (10, 20).

13. A method for wirelessly communicating with an LED driver (10, 20) being not supplied by mains power supply especially during production of said LED driver (10, 20), the method comprising the steps of:
wirelessly communicating (41) according to a first communication protocol with the aid of a first communication unit (11) of the LED driver (10, 20),
wirelessly communicating (42) according to a second communication protocol with the aid of a second communication unit (12) of the LED driver (10, 20), and
harvesting energy from the first communication unit (11) for supplying the second communication unit (12) especially with the aid of an energy harvesting unit (13) of the LED driver (10, 20), said energy harvesting unit (13) connected to the first communication unit (11) and the second communication unit (12).

14. The method according to claim 13,
wherein the first communication protocol comprises or is a near-field communication protocol, and/or
wherein the second communication protocol comprises or is a Bluetooth protocol, especially a Bluetooth Low Energy protocol, a Wireless Local Area Network protocol, especially a Wireless Local Area Network protocol with low energy capabilities, a Matter protocol, or any combination thereof.

15. The method according to claim 13 or 14,
wherein the method further comprises the step or steps of:
transferring control data and/or activation data and/or enabling data and/or initialization data especially with respect to the LED driver (10, 20) preferably with the aid of the first communication unit (11), and/or
transferring configuration data and/or programming data and/or read out data especially with respect to the LED driver (10, 20) preferably with the aid of the second communication unit (12).
